# EUROPÄISCHE PATENTANMELDUNG

(11) **EP 0 860 244 A2**
(43) Veröffentlichungstag der Anmeldung: **26.08.1998**
(21) Anmeldenummer: 98101878.1
(22) Anmeldetag: 04.02.1998
(51) Int. Cl.: B25B 27/00, B25B 13/52

(54) **Riemenscheiben-Gegenhalter zur Montage oder Demontage von Riemenscheiben**

(30) Priorität: 25.02.1997 DE 29703268 U
(71) Anmelder: Eduard Wille GmbH & Co., D-42349 Wuppertal (DE)
(72) Erfinder: Kreischer, Torsten, 58285 Gevelsberg-Silschede (DE)
(74) Vertreter: Weisse, Jürgen, Dipl.-Phys.

(57) **Zusammenfassung**

Ein Riemenscheiben-Gegenhalter zur Montage oder Demontage von Riemenscheiben weist einen um den Umfang der Riemenscheibe herumlegbaren, nur an einem ersten Ende (28) an einem langgestreckten Gegenhalter-Gehäuse (10) fest gehalterten, eine Schlaufe (30) bildenden und gleichzeitig mit dem zweiten Ende (32) in dem Gegenhalter-Gehäuse (10) verschiebbar geführten, auf der Riemenscheibe festziehbaren Halteriemen (26) auf, durch welchen die Riemenscheibe beim Anziehen oder Lösen von Befestigungs-Schrauben gegen Verdrehung gegengehalten wird. In dem Gegenhalter-Gehäuse (10) ist eine lösbare Klemmvorrichtung (34) zum Festklemmen des ersten Endes (28) des Halteriemens (26) vorgesehen. Als Klemmvorrichtung (34) ist in dem Gegenhalter-Gehäuse (10) ein Klemmhebel (22) schwenkbar gelagert. An dem riemenseitigen Ende (36) des Klemmhebels (22) ist ein Klemmstück (44) angebracht. Ein Ende (28) des Halteriemens (26) ist zwischen das Klemmstück (44) und die angrenzende Innenwand (50) des Gegenhalter-Gehäuses (10) einführbar. Der Klemmhebels (22) ist in einer Klemmstellung festhaltbar, in welcher er das Ende (28) des Halteriemens (26) klemmend hält.

## Beschreibung

Die Erfindung betrifft einen Riemenscheiben-Gegenhalter zur Montage oder Demontage von Riemenscheiben mit einem um den Umfang der Riemenscheibe herumlegbaren, nur an einem ersten Ende an einem langgestreckten Gegenhalter-Gehäuse gehalterten eine Schlaufe bildenden und gleichzeitig mit dem zweiten Ende in dem Gegenhalter-Gehäuse verschiebbar geführten, auf der Riemenscheibe festziehbaren Halteriemen, durch welchen die Riemenscheibe beim Anziehen oder Lösen von Befestigungs-Schrauben gegen Verdrehung gegengehalten wird.

Riemenscheiben sind üblicherweise mit einer drehbar gelagerten Welle verbunden. Bei der Montage oder Demontage der Riemenscheibe werden Drehmomente auf eine Schraube ausgeübt, mittels welcher die Riemenscheibe an der Welle befestigt ist. Unter dem Einfluß dieser Drehmomente würde sich die Welle mit der Riemenscheibe wegdrehen. Es ist daher erforderlich, die Riemenscheibe festzuhalten und an einem Wegdrehen zu hindern.

Hierzu dienen Riemenscheiben-Gegenhalter. Bei solchen Riemenscheiben-Gegerhaltern ist an einem langgestreckten Gegenhalter-Gehäuse ein erstes Ende eines Halteriemens befestigt. Der Halteriemen bildet eine Schlaufe, die um die Riemenscheibe herumgelegt wird. Das zweite Ende des Halteriemens ist in dem Gegenhalter-Gehäuse verschiebbar geführt. Dadurch kann der Halteriemen auf der Riemenscheibe festgezogen werden. Wird dann beim Anziehen oder Lösen von Befestigungs-Schrauben ein Drehmoment auf die Riemenscheibe ausgeübt, dessen Drehsinn längs des Halteriemens von dem festgehaltenen ersten Ende des Halteriemens zu dem losen zweiten Ende hin verläuft, dann wird der Halteriemen durch die Reibung auf der Riemenscheibe zusätzlich festgezogen. Die Riemenscheibe wird bei dem Anziehen oder Lösen der Befestigungs-Schrauben gegen Verdrehung gegengehalten. Ferner können mit diesem Wekzeug bei Einstellarbeiten Kurbelwellenscheiben oder Nockenwellenräder verdreht werden.

Bei bekannten Riemenscheiben-Gegenhaltern dieser Art ist der Halteriemen durch Schrauben an dem Gegenhalter-Gehäuse befestigt. (Firmendruckschrift der Eduard Wille GmbH & Co.) Dazu wird der Halteriemen an dem ersten Ende mit Bohrungen versehen, durch welche die Schrauben hindurchgeführt sind. Das ist umständlich. Das Auswechseln des Halteriemens bei Verschleiß oder zur Anpassung an unterschiedliche Riemenscheiben wird erschwert.

Es ist auch ein Riemenscheiben-Gegenhalter bekannt, bei dem der Halteriemen von einem Zahnriemen gebildet ist. Dabei ist der Zahnriemen zwischen der Innenwandung des Gegenhalter-Gehäuses und einem mit dem Gegenhalter-Gehäuse vernieteten Schloß, das eine zu dem Zahnriemen komplementäre Verzahnung aufweist, formschlüssig gehalten. (DE-U-G 89 02 187.8). Das setzt einen Zahnriemen als Halteriemen voraus. Die Demontage und der Austausch des Halteriemens ist schwierig.

Bei den bekannten Riemenscheiben-Gegenhaltern sind die Gegenhalter-Gehäuse so ausgebildet und bemessen, daß nur eine spezielle Riemenform verwendet werden kann, beispielseweise Keil-, Keilzahn-, Rippen- oder Zahnriemen. Jeder Typ von Riemenscheiben-Gegenhalter ist daher nur entsprechend begrenzt einsetzbar.

Das DE-U-1 988 999 zeigt einen Bandschlüssel, bei welchem ein Halteriemen an einem Ende durch eine Schlaufe formschlüssig an einem Bügel des Gehäuses befestigt ist. Die Schlaufe wird durch Vernieten der aufeinanderliegenden Teile des Bandes gebildet.

Die US-A-2 960 896 zeigt einen Bandschlüssel, bei welchem in einem Gehäuse die beiden Enden eines eine Schlaufe bildenden Bandes geführt sind. Diese Enden können nach Festziehen des Bandes auf einem zu drehenden Objekt werden beide Enden des Bandes durch einen Keil gleichzeitig festgeklemmt. Nach Lösen dieses Keils können beide Enden des Bandes zur Vergrößerung oder Verkleinerung der Schlaufe in dem Gehäuse verschoben werden. Es sind also entweder beide Enden festgeklemmt oder beide Enden verschiebbar.

Der Erfindung liegt die Aufgabe zugrunde, einen Riemenscheiben-Gegenhalter der eingangs genannten Art so auszubilden, daß die Befestigung des Halteriemens an dem Gegenhalter-Gehäuse und ein Auswechseln des Halteriemens auf einfache Weise zu bewerkstelligen ist.

Erfindungsgemäß wird diese Aufgabe dadurch gelöst, daß in dem Gegenhalter-Gehäuse eine lösbare Klemmvorrichtung zum Festklemmen des ersten Endes des Halteriemens vorgesehen ist.

Die Befestigung des ersten Endes des Halteriemens erfolgt somit weder durch Verschrauben noch durch eine formschlüssige Halterung. Vielmehr wird das erste Ende des Halteriemens einfach festgeklemmt. Es hat sich gezeigt, daß der Halteriemen mit einer Klemmvorrichtung ausreichend sicher an dem Gegenhalter-Gehäuse befestigt werden kann. Die Befestigung mittels einer lösbaren Klemmvorrichtung bietet den Vorteil, daß ein schnelles und bequemes Austauschen des Halteriemens erfolgen kann. Ein verschlissenes erstes Ende des Halteriemens kann nach Lösen der Klemmvorrichtung einfach abgeschnitten werden, worauf der Halteriemen wieder an dem Gegenhalter-Gehäuse festgeklemmt werden kann.

Ausgestaltungen des Riemenscheiben-Gegenhalters sind Gegenstand der Unteransprüche.

Ein Ausführungsbeispiel der Erfindung ist nachstehend unter Bezugnahme auf die zugehörigen Zeichnungen näher erläutert.
- Fig. 1: zeigt eine Seitenansicht eines Riemenscheiben-Gegenhalters, teilweise im Schnitt.
- Fig.2: ist eine Ansicht des Riemenscheiben-Gegenhalters von oben in Fig.1 gesehen.

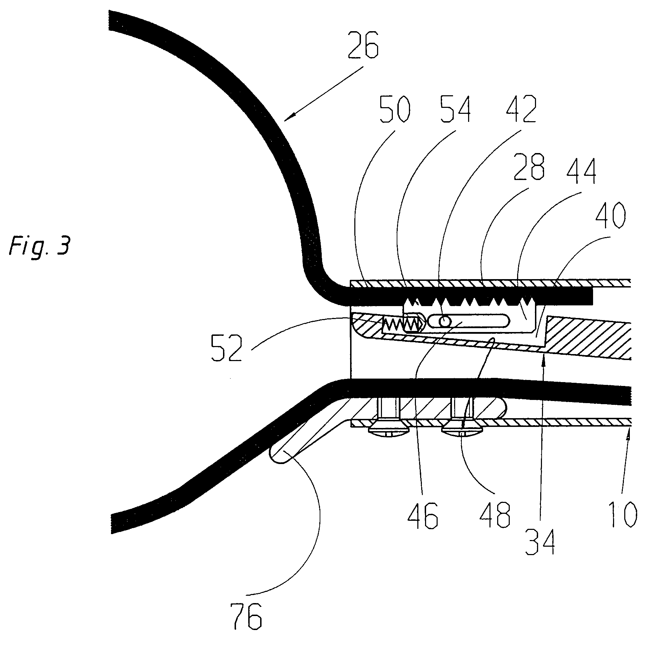

- Fig.3: zeigt eine Einzelheit in vergrößertem Maßstab.

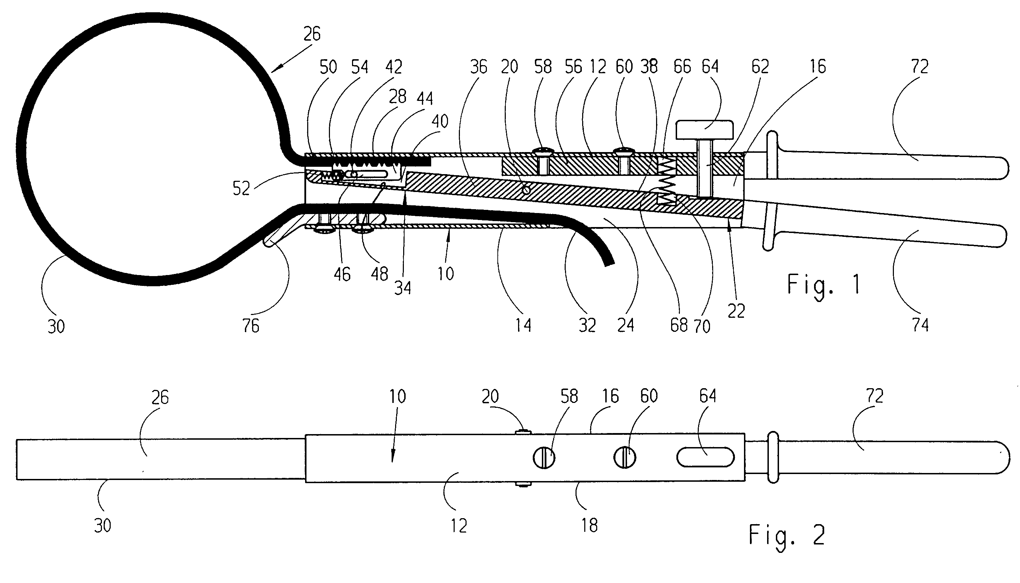

Mit 10 ist ein Gegenhalter-Gehäuse bezeichnet. Das Gegenhalter-Gehäuse 10 ist von einem Vierkantrohr mit länglich-rechteckigem Querschnitt gebildet. Das Gehäuse weist einander gegenüberliegende Schmalseiten 12 und 14 auf, zwischen denen sich die ebenfalls einander gegenüberliegenden Breitseiten 16 und (in Fig. 1 nicht sichtbar) 18 erstrecken. Die Innenabmessungen des länglich-rechteckigen Querschnitts des Gegenhalter-Gehäuses 10 sind größer als 15 mm, vorzugsweise etwa 20 mm, an der Schmalseite und größer als 20 mm, vorzugsweise etwa 30 mm an der Breitseite. Zwischen den beiden Breitseiten 16 und 18 erstreckt sich in der Mitte des Gegenhalter-Gehäuses 10 ein Lagerzapfen 20. Auf dem Lagerzapfen 20 ist ein doppelarmiger Hebel 22 gelagert. Das Gegenhalter-Gehäuse 10 weist auf der Schmalseite 14 im Bereich des in Fig. 1 rechten Endes einen Auschnitt 24 auf.

Ein Halteriemen 26 in Form eines Keilriemen-Stücks weist ein erstes Ende 28 auf, das in noch zu beschreibender Weise an dem in Fig. 1 linken Ende des Gegenhalter-Gehäuses 10 gehaltert ist. Der Halteriemen 26 bildet dann eine Schlaufe 30 und ist mit seinem zweiten Ende 32 in die offene Stirnseite des Gegenhalter-Gehäuses 10 hineingesteckt. Das zweite Ende 32 des Halteriemens ist dann durch den Ausschnitt 24 wieder aus dem Gegenhalter-Gehäuse 10 herausgeführt.

Das erste Ende 28 des Halteriemens 26 ist durch eine Klemmvorrichtung an dem Gegenhalter-Gehäuse 10 angebracht. Die Klemmvorrichtung ist generell mit 34 bezeichnet. Die Klemmvorrichtung 34 umfaßt den doppelarmigen Hebel 22 mit einem riemenseitigen Arm 36 und einem dem Halteriemen 26 abgewandten Arm 38. Der riemenseitige Arm 36 ist im Bereich des ersten Endes 28 mit einer länglichen Ausnehmung 40 versehen. Zwischen den Seitenwänden der Ausnehmung 40 erstreckt sich ein Zapfen 42. Ein längliches Klemmstück 44 ist mit einem Langloch 46 auf dem Zapfen 42 geführt. In der in Fig. 1 dargestellten Klemmstellung des doppelarmigen Hebels 22 bildet der Grund der Ausnehmung eine Auflauffläche 48, die mit der gegenüberliegenden Innenwand 50 des Gegenhalter-Gehäuses 10 einen spitzen Winkel bildet. Das Klemmstück 44 liegt mit seiner Vorderkante an dieser Auflauffläche 48 an. Eine Schraubenfeder 52 stützt sich an der riemenseitigen Stirnfläche der Ausnehmung 40 ab und sucht das Klemmstück 44 nach rechts in Fig. 1 zu drücken. Das Klemmstück 44 ist auf seiner dem Ende 28 des Halteriemens 26 zugewandten Seite mit Zacken 54 versehen.

Auf der Innenseite des Vierkantrohres des Gegerhalter-Gehäuses 10 ist eine Platte 56 durch Schrauben 58 und 60 befestigt. In einer Gewindebohrung des Gegenhalter-Gehäuses 10 und der Platte 56 ist eine Feststellschraube 62 geführt. Die Feststellschraube 62 liegt an dem Arm 38 des doppelarmigen Hebels 22 an. Die Feststellschraube 62 ist mit einem Knebel 64 versehen. Weiterhin ist in der Platte 56 eine Bohrung 66 vorgesehen. In dieser Bohrung 66 ist das eine Ende einer auf Druck vorgespannten Schraubenfeder 68 geführt. Das andere Ende der Schraubenfeder liegt auf dem Grund einer Vertiefung 70 des Armes 38 an.

An dem Gegenhalter-Gehäuse 10 ist auf der dem Halteriemen 26 abgewandten Seite ein Griffteil 72 angebracht. Ein Griffteil 74 ist gegenüber dem Griffteil 72 an dem Arm 38 des doppelarmigen Hebels 22 angebracht.

An dem riemenseitigen Ende des Gegenhalter-Gehäuses 10 ist auf der dem Klemmstück 44 gegenüberliegenden Schmalseite 14 ein Führungsstück 76 angeschraubt, über welches das zweite Ende 32 des Halteriemens 26 geführt ist.

Das beschriebene Werkzeug arbeitet wie folgt:

Wenn die Schraube 62 mittels des Knebels 64 zurückgedreht ist, kann der doppelarmige Hebel 22 durch Zusammendrücken der beiden Griffstücke 72 und 74 gegen die Wirkung der Schraubenfeder 68 entgegen dem Uhrzeigersinn in Fig. 1 verschwenkt werden. Das Klemmstück 44 wird nach unten in Fig. 1 bewegt. Dabei gleitet es unter dem Einfluß der Schraubenfeder 52 mit dem Langloch 46 auf dem Zapfen 42, bis der Zapfen 42 am linken Ende des Langloches 46 anliegt.

Dann wird das erste Ende 28 des Halteriemens 26 zwischen die Innenwand 50 des Gegenhalter-Gehäuses 10 und das abgehobene Klemmstück 44 eingeschoben. Dann werden die Griffstücke 72 und 74 losgelassen. Der doppelarmige Hebel 22 wird unter dem Einfluß der Schraubenfeder 68 im Uhrzeigersinn in Fig.1 verschwenkt. Dabei legt sich das Klemmstück 44 an das Ende 28 des Halteriemens 26 an. Der Halteriemen 26 wird zwischen der Innenwand 50 und dem Klemmstück 44 festgeklemmt. Eine zusätzliche Sicherung erfolgt mittels der Zacken 54 des Klemmstückes 44. Diese Zacken drücken sich in das Ende 28 des Halteriemens 26 ein. In dieser Klemmstellung wird der doppelarmige Hebel 22 durch die Schraube 62 gesichert. Die Schraube 62 wird niedergeschraubt und hält den doppelarmigen Hebel in seiner Klemmstellung.

Aus dem Halteriemen 26 wird dann die Schlaufe 30 gebildet. Das zweite Ende 32 des Halteriemens 26 wird in das offene linke Ende des Gegenhalter-Gehäuses 10 eingesteckt und über das Führungsstück 76 zu dem Ausschnitt 24 und aus dem Ausschnitt 24 heraus geführt.

Die Schlaufe wird um eine zu haltende (nicht dargestellte) Riemenscheibe herumgelegt und mittels des Endes 32 auf der Riemenscheibe festgezogen. Wenn dann auf die Riemenscheibe beim Anziehen oder Lösen von Befestigungsschrauben ein Drehmoment entgegen dem Uhrzeigersinn in Fig. 1 ausgeübt wird, dann zieht sich der Halteriemen 26, der an dem ersten Ende 28 fest gehalten ist, durch die in Umfangsrichtung der Riemenscheibe zwischen dieser und dem Halteriemen 26 wirkenden Reibungskräfte auf der Riemenscheibe fest. Die Riemenscheibe wird gegen das Drehmoment "gegengehalten".

Dabei wirkt auf das Ende 28 des Halteriemens 26 eine nach links in Fig. 1 wirksame Kraft. Diese Kraft sucht das Ende 28 nach links zu ziehen. Durch die Reibung und die Zacken 54 wird dabei auch das Klemmstück 44 nach links in Fig. 1 gezogen. Bei einer Bewegung nach links läuft das Klemmstück 44 auf der Auflauffläche 48 hoch und drückt sich zunehmend fester an das Ende 28 des Halteriemens 26 an. Dadurch wird die Klemmwirkung weiter verstärkt.

Zum Lösen des Halteriemens 26 braucht nur die Schraube 62 zurückgedreht zu werden. Dann können die Griffteile 72 und 74 zusammengedrückt werden. Es ist dann möglich, das Ende 28 des Halteriemens 26 herauszuziehen. Auf diese Weise kann der Halteriemen bequem ausgetauscht und an das Profil der jeweils gegenzuhaltenden Riemenscheibe angepaßt werden. Die Abmessungen des Gegenhalter-Gehäuses 10 sind so, daß als Halteriemen praktisch alle im Automobilbau gebräuchlichen Riementypen verwendet werden können. Verschlissene Halteriemen können bequem ausgetauscht werden. Es ist nicht erforderlich, Löcher in Halteriemen zu bohren. Die Halteriemen können beliebiger Art sein. Es besteht keine Beschränkung auf Zahnriemen.

## Patentansprüche

1. Riemenscheiben-Gegenhalter zur Montage oder Demontage von Riemenscheiben mit einem um den Umfang der Riemenscheibe herumlegbaren, nur an einem ersten Ende (28) an einem langgestreckten Gegerhalter-Gehäuse (10) fest gehalterten, eine Schlaufe (30) bildenden und gleichzeitig mit dem zweiten Ende (32) in dem Gegerhalter-Gehäuse (10) verschiebbar geführten, auf der Riemenscheibe festziehbaren Halteriemen (26), durch welchen die Riemenscheibe beim Anziehen oder Lösen von Befestigungs-Schrauben gegen Verdrehung gegengehalten wird, **dadurch gekennzeichnet, daß** in dem Gegenhalter-Gehäuse (10) eine lösbare Klemmvorrichtung (34) zum Festklemmen des ersten Endes (28) des Halteriemens (26) vorgesehen ist.

2. Riemenscheiben-Gegenhalter nach Anspruch 1**, dadurch gekennzeichnet, daß**
(a) als Klemmvorrichtung (34) in dem Gegenhalter-Gehäuse (10) ein Klemmhebel (22) schwenkbar gelagert ist,
(b) an dem riemenseitigen Ende (36) des Klemmhebels (22) ein Klemmstück (44) angebracht ist,
(c) ein Ende (28) des Halteriemens (26) zwischen das Klemmstück (44) und die angrenzende Innenwand (50) des Gegenhalter-Gehäuses (10) einführbar ist, und
(d) Feststellmittel (62) zum Halten des Klemmhebels (22) in einer Klemmstellung vorgesehen sind, in welcher er das Ende (28) des Halteriemens (26) klemmend hält.

3. Riemenscheiben-Gegenhalter nach Anspruch 2, **dadurch gekennzeichnet, daß**
(a) der Klemmhebel ein in dem Gegenhalter-Gehäuse (10) um eine Schwenkachse (20) schwenkbar gelagerter, doppelarmiger Hebel (22) ist, der an einem Arm (36) das Klemmstück (44) und an dem anderen Arm (38) einen Griffteil (74) trägt
(b) das Gegenhalter-Gehäuse (10) einen dem Griffteil (74) des doppelarmigen Hebels (22) gegenüberliegenden Griffteil (72) aufweist,
(c) zwischen dem Gegenhalter-Gehäuse (10) und dem dopelarmigen Hebel (22) eine Druckfeder (68) angeordnet ist, welche den Hebel (22) gegenüber dem Gegenhalter-Gehäuse (10) in seine Klemmstellung zu drücken sucht und
(d) der doppelarmige Hebel (22) durch Gegeneinanderdrücken der beiden Griffteile (72,74) nach Lösen der Feststellmittel (62) gegen die Wirkung der Druckfeder (68) aus seiner Klemmstellung in eine Offenstellung verschwenkbar ist, in welcher er das Ende (28) des Halteriemens (26) freigibt.

4. Riemenscheiben-Gegenhalter nach Anspruch 3, **dadurch gekennzeichnet, daß** die Feststellmittel von einer in dem Gegenhalter-Gehäuse (10) quer zu dessen Längsrichtung geführten Schraube (62) gebildet sind, welche mit ihrer Stirnfläche an dem doppelarmigen Hebel (22) anliegt.

5. Riemenscheiben-Gegenhalter nach einem der Ansprüche 2 bis 4, **dadurch gekennzeichnet, daß**
(a) der Klemmhebel (22) in seiner Klemmstellung sich unter einem Winkel zu der an das Klemmstück (44) angrenzenden Innenwand (50) erstreckt und eine das Klemmstück (44) aufnehmende Ausnehmung (40) aufweist, deren Boden eine zu der Innenwand (50) geneigte Auflauffläche (48) bildet, und
(b) das Klemmstück (44) mit einem Langloch (46) auf einem sich durch die Ausnehmung (40) erstreckenden Zapfen (42) geführt ist und an der Auflauffläche (48) anliegt, so daß das Klemmstück (44) in der Klemmstellung des Klemmhebels (22) bei einem Zug auf den Halteriemen (26) auf der Auflauffläche (48) hochläuft und gegen den Halteriemen (26) gedrückt wird

6. Riemenscheiben-Gegenhalter nach Anspruch 5, **dadurch gekennzeichnet, daß** zwischen der riemenseitigen Stirnfläche des Klemmstücks und der angrenzenden Stirnfläche der Ausnehmung eine Druckfeder (52) sitzt.

7. Riemenscheiben-Gegenhalter nach einem der Ansprüche 2 bis 6, **dadurch gekennzeichnet, daß** das Klemmstück (44) Zacken (54) aufweist, die sich in den Halteriemen (26) eindrücken.

8. Riemenscheiben-Gegenhalter nach einem der Ansprüche 1 bis 7, **dadurch gekennzeichnet, daß**
(a) das Gegenhalter-Gehäuse (10) ein Vierkantrohr bildet, und
(b) die inneren Abmessungen des Querschnitts des Vierkantrohres auf der Schmalseite größer als 15 mm und auf der Breitseite größer als 20 mm sind.

9. Riemenscheiben-Gegenhalter nach Anspruch 8, dadurch gekennzeichnet, daß die inneren Abmessungen des Querschnitts des Vierkantrohres auf der Schmalseite etwa 20 mm und auf der Breitseite etwa 30 mm sind.

10. Riemenscheiben-Gegenhalter nach Anspruch 8 oder 9, **dadurch gekennzeichnet, daß** in die Öffnung des Vierkantrohres an dem riemenseitigen Ende auf der der klemmenden Innenwand (50) gegenüberliegenden Seite ein stumpfwinkliges Winkelstück (76) zur Führung des zweiten Endes (32) des Halteriemens (26) eingesetzt ist.

11. Riemenscheiben-Gegenhalter nach einem der Ansprüche 8 bis 10, **dadurch gekennzeichnet, daß** die das Winkelstück (76) tragende Seitenwand (14) des Vierkantrohres an dem dem Halteriemen (26) abgewandten Ende einen Ausschnitt (24) aufweist.
